# EUROPEAN PATENT SPECIFICATION

(11) **EP 3 284 573 B1**
(45) Date of publication and mention of the grant of the patent: **18.05.2022**
(21) Application number: 17179920.8
(22) Date of filing: 06.07.2017
(51) Int. Cl.: B29C 45/13, B29C 45/17, B29C 45/50

(54) **METHOD AND INJECTION MOLDING MACHINE WITH A DUAL INJECTION-UNIT DEVICE**
SPRITZGIESSVERFAHREN UND SPRITZGIESSMASCHINE MIT EINER DOPPELEINSPRITZEINHEIT
PROCÉDÉ ET MACHINE DE MOULAGE PAR INJECTION COMPRENANT UN DISPOSITIF D'UNITÉ D'INJECTION DOUBLE

(30) Priority: 15.08.2016 CN 201610667921
(43) Date of publication of application: 21.02.2018
(73) Proprietor: Chen Hsong Asset Management Limited, New Territories, Hong Kong (HK)
(72) Inventor: CHIANG, Chi Kin, Industrial Estate, New Territories (HK); LIU, Li Xiong, Industrial Estate, New Territories (HK); CHEN, Ronglin, Industrial Estate, New Territories (HK)
(74) Representative: Bals & Vogel Patentanwälte PartGmbB

(56) References cited:
- CN-A- 101 327 631
- CN-B- 102 205 595
- CN-U- 203 438 460
- JP-A- S56 106 838
- US-A- 3 940 223

## Description

### Field of the Invention

The present invention relates to an injection molding machine, and particularly, relates to an injection molding machine and a dual injection-unit device thereof.

### Background of the Invention

In conventional injection molding machines, the weight of the injection molding products is in direct proportional to the diameter of the screw. The injection molding products with a super high weight require parts, such as a screw and a melted material barrel of corresponding larger diameters, to adapt therefor. However, the machining and assembly precisions of the screw and the melted material barrel with larger diameters remain a bottleneck in the injection molding industry for a long time, leading to inconvenience when in use and low working efficiency.

Therefore, there is an urgent need to invent an injection molding machine which is suitable for injection molding products of both super high weight and low weight with the diameter of the screw remaining unchanged. Injection molding machines or devices are known i.e. from documents US 3 940 223 A, CN 102 205 595 B, JP S56 106838 A, CN 203 438 460U, and CN 101 327 631 A.

### Brief Summary of the Invention

In order to overcome the technical problems associated with the prior art, the present invention provides a method according to independent claim 1 as well as an injection molding machine according to independent claim 2. The injection molding machine comprises a frame, an injection-shift holder provided on the frame, and a dual injection-unit device, to solve the problem that the screw with a relatively small diameter could not deal with an injection molding product of high weight, and the problem associated with the interchange between injection molding products of different weights.

To solve the above-mentioned technical problems, the dual injection-unit device is disposed on the injection-shift holder. The dual injection-unit device further comprises a primary injection unit and a secondary injection unit which is fixed with respect to the primary injection unit. The outer end of the said primary injection unit is provided with a nozzle, the said secondary injection unit is communicated with the nozzle via a connecting conduit, and the connecting conduit and the nozzle constitute a three-way connecting structure at the connecting position thereof. The connecting conduit is provided with a first check valve to shut off or unidirectionally open a flow passage from the secondary injection unit to the nozzle.

The nozzle of the said primary injection unit is provided with a second check valve, which is disposed between the said primary injection unit and the said three-way connecting structure so as to shut off or unidirectionally open the flow passage from the said primary injection unit to the said nozzle.

The said primary injection unit and the said secondary injection unit are each provided with an injection screw, respectively, which can move forward or backward simultaneously.

In a preferred example, the said primary injection unit and the said secondary injection unit extend from the injection-shift holder and are parallelly disposed in the same direction.

In a preferred example, the said connecting conduit and the said nozzle are disposed perpendicularly with respect to each other.

The present invention has the following advantages over the prior art. Since it is additionally provided with a secondary injection unit and a check valve to tailor for injecting different kinds of molding products, the dual injection-unit device of an injection molding machine according to the present invention adapts for a large range of weights, is particularly suitable for switching between the product of super high weight and the product of low weight without enlarging the diameter of the injection screw or increasing the injection stroke, and therefore can considerably improve the working efficiency. At the same time, the dual injection-unit device of an injection molding machine according to the present invention is of a simple structure, can be readily machined and assembled, and has a small footprint.

### Brief Description of the Drawings

Fig. 1 is a structural illustration of the dual injection-unit device of an injection molding machine according to present example.
Fig. 2 is an enlarged structural view for the part A in Fig. 1.

### List of the reference numbers:

2: an injection-shift holder
3: a dual injection-unit device
31: a primary injection unit
32: a secondary injection unit
33: a nozzle
34: a connecting conduit
35: a first check valve
36: a second check valve
4: a three-way connecting structure

### Detailed Description of the Invention

The typical examples that embody the features and advantages of the present invention will be described in detail in the following description. It is to be understood that the present invention can have various variations in different examples, all of which do not depart from the scope of the invention. The illustrations and descriptions herein are illustrative in essence, and therefore do not limit the invention.

Hereinafter the present invention will be further described in detail with reference to the example and the accompanying figures.

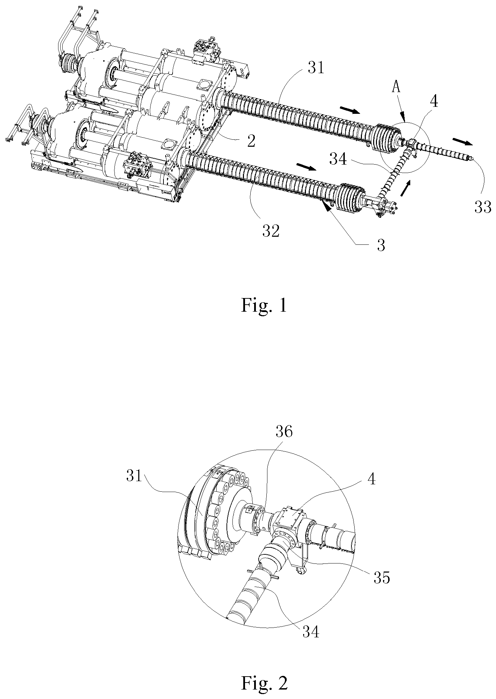

As shown in Figs. 1-2, the injection molding machine according to the present example comprises a frame, an injection-shift holder 2 provided on the frame, and a dual injection-unit device 3 provided on the injection-shift holder 2.

The dual injection-unit device 3 according to the present example comprises a primary injection unit 31, a secondary injection unit 32, a nozzle 33, a connecting conduit 34, a first check valve 35, a second check valve 36 and a three-way connecting structure 4.

The primary injection unit 31 and the secondary injection unit 32 extend from the injection-shift holder 2 in the same direction and are parallelly disposed on the injection-shift holder 2. The secondary injection unit 32 and primary injection unit 31 are fixed with respect to each other. The primary injection unit 31 and the secondary injection unit 32 are each provided with an injection screw in such a way that the two injection screws can move forward or backward simultaneously. It is ensured that no relative displacements will occur between the primary injection unit 31 and the secondary injection unit 32 when they are in operation. Therefore, misalignment and poor sealing at the connecting portion between the two units that would otherwise occur due to the relative displacements, and consequent leakage and unsmooth passage of melted material can be avoided. In this way, the required melted materials can be provided within the prescribed time, the product precision can be maintained, and the parts at the connecting position can be prevented from damages.

In this example, there is provided with only one nozzle 33, which is disposed on the outer end of the primary injection unit 31. The outer end of the secondary injection unit 32 is provided with a connecting conduit 34. The secondary injection unit 32 is communicated with the nozzle 33 via the connecting conduit 34. The connecting conduit 34 and the nozzle 33 constitute a three-way connecting structure 4 at the connecting position thereof.

Preferably, the connecting conduit 34 and nozzle 33 are disposed perpendicularly with respect to each other.

The connecting conduit 34 is provided with a first check valve 35 to shut off or unidirectionally open the flow passage from the secondary injection unit 32 to the nozzle 33. Preferably, the first check valve 35 is disposed at a location near to the three-way connecting structure 4.

Furthermore, the nozzle 33 of the primary injection unit 31 is provided with a second check valve 36. The second check valve 36 is disposed between the primary injection unit 31 and the three-way connecting structure 4 so as to shut off or unidirectionally open the flow passage from the primary injection unit 31 to the nozzle 33.

The first check valve 35 and the second check valve 36 in the present example are check valves of high precisions.

In other examples, the primary injection unit 31 and the secondary injection unit 32 can also be disposed non-parallely with respect to each other.

In other examples, there may be a plurality of secondary injection units; and each additional secondary injection unit is provided with a check valve to shut off or unidirectionally open the flow passage to the nozzle. The number of the secondary injection units is not limited.

The working principle of the dual injection-unit device of the present example is as follows. Both the primary injection unit and the secondary injection unit can conduct material melting and injection independently. When the product is of high weight and hence a large amount of melted material is needed, the first check valve and the second check valve are simultaneously switched on, such that the primary injection unit and the secondary injection unit perform material melting and injection simultaneously. When the product needs a small amount of melted material, the first check valve is switched off, and the second check valve is switched on, or alternatively, the first check valve is switched on, and the second check valve is switched off. In this way, only the primary injection unit or the secondary injection unit is activated to perform material melting and injection.

Since it is additionally provided with a secondary injection unit and a check valve to tailor for injecting different kinds of molding products, the dual injection-unit device of an injection molding machine according to the present invention adapts for a large range of weight, is particularly suitable for switching between the product of super high weight and the product of low weight without enlarging the diameter of the injection screw or increasing the injection stroke, and therefore can considerably improve the working efficiency. At the same time, the dual injection-unit device of an injection molding machine according to the present invention is of a simple structure, can be readily machined and assembled, and has a small footprint.

## Claims

1. Method, comprising the following steps:
a) providing a dual injection-unit device of an injection molding machine, comprising:
a primary injection unit and a secondary injection unit, which are being disposed on an injection-shift holder, wherein the secondary injection unit is fixed with respect to the primary injection unit;
the outer end of the primary injection unit is provided with a nozzle, the secondary injection unit is communicated with the nozzle via a connecting conduit, and the connecting conduit and the nozzle constitute a three-way connecting structure at the connecting position thereof;
the connecting conduit is provided with a first check valve to shut off or unidirectionally open a flow passage from the secondary injection unit to the nozzle,
wherein the nozzle of the said primary injection unit is provided with a second check valve, which is disposed between the said primary injection unit and the said three-way connecting structure so as to shut off or unidirectionally open the flow passage from the said primary injection unit to the said nozzle,
wherein the said primary injection unit and the said secondary injection unit are each provided with an injection screw, respectively, which can move forward or backward simultaneously, so that no relative displacements occur between the said primary injection unit and the said secondary injection unit when the said primary injection unit and the said secondary injection unit are in operation,
b) simultaneously switching on, when a product to be processed by the dual injection-unit device is of high weight, the first check valve and the second check valve, such that the primary injection unit and the secondary injection unit perform material melting and injection simultaneously
c) switching off the first check valve and switching on the second check valve when the product needs a small amount of melted material, or alternatively,
switching on the first check valve and switching off the second check valve,
whereby only the primary injection unit or the secondary injection unit is activated to perform material melting and injection.

2. An injection molding machine, comprising a frame, an injection-shift holder provided on the frame, and a dual injection-unit device for performing the method according to claim 1, which is disposed on the injection-shift holder, wherein the dual injection-unit device comprises a primary injection unit and a secondary injection unit which is fixed with respect to the primary injection unit; the outer end of the said primary injection unit is provided with a nozzle, the said secondary injection unit is communicated with the nozzle via a connecting conduit, and the connecting conduit and the nozzle constitute a three-way connecting structure at the connecting position thereof; the connecting conduit is provided with a first check valve to shut off or unidirectionally open a flow passage from the secondary injection unit to the nozzle; wherein the nozzle of the said primary injection unit is provided with a second check valve, which is disposed between the said primary injection unit and the said three-way connecting structure so as to shut off or unidirectionally open the flow passage from the said primary injection unit to the said nozzle; and wherein the said primary injection unit and the said secondary injection unit are each provided with an injection screw, respectively, which can move forward or backward simultaneously.

3. The injection molding machine according to claim 2, **characterized in that**, the said primary injection unit and the said secondary injection unit extend from the injection-shift holder and are parallelly disposed in the same direction.

4. The injection molding machine according to claim 3, **characterized in that** the said connecting conduit and the said nozzle are disposed perpendicularly with respect to each other.

## Patentansprüche

1. Verfahren , das die folgenden Schritte umfasst:
a) Bereitstellung einer Doppel-Spritzeinheit einer Spritzgießmaschine , die Folgendes umfasst:
eine primäre Einspritzeinheit und eine sekundäre Einspritzeinheit , die auf einem Einspritzschichthalter angeordnet sind , wobei die sekundäre Einspritzeinheit in Bezug auf die primäre Einspritzeinheit fixiert ist;
das äußere Ende der primären Einspritzeinheit mit einer Düse versehen ist, die sekundäre Einspritzeinheit mit der Düse über eine Verbindungsleitung verbunden ist und die Verbindungsleitung und die Düse eine Dreiwege-Verbindungsstruktur an ihrer Verbindungsposition bilden ;
die Verbindungsleitung mit einem ersten Rückschlagventil versehen ist, um einen Durchflusskanal von der sekundären Einspritzeinheit zur Düse zu sperren oder unidirektional zu öffnen,
wobei die Düse der primären Einspritzeinheit mit einem zweiten Rückschlagventil versehen ist, das zwischen der primären Einspritzeinheit und der Dreiwege-Verbindungsstruktur angeordnet ist, um den Durchflusskanal von der primären Einspritzeinheit zur Düse zu sperren oder in eine Richtung zu öffnen ,
wobei die primäre Einspritzeinheit und die sekundäre Einspritzeinheit jeweils mit einer Einspritzschnecke versehen sind, die sich gleichzeitig vorwärts oder rückwärts bewegen kann , so dass keine relativen Verschiebungen zwischen der primären Einspritzeinheit und der sekundären Einspritzeinheit auftreten , wenn die primäre Einspritzeinheit und die sekundäre Einspritzeinheit in Betrieb sind ,
b) gleichzeitiges Einschalten des ersten Rückschlagventils und des zweiten Rückschlagventils , wenn ein von der Doppel-Spritzeinheit zu verarbeitendes Produkt ein hohes Gewicht aufweist , so dass die primäre Einspritzeinheit und die sekundäre Einspritzeinheit gleichzeitig Materialschmelzen und Einspritzen durchführen
c) Ausschalten des ersten Rückschlagventils und Einschalten des zweiten Rückschlagventils , wenn das Produkt eine geringe Menge an geschmolzenem Material benötigt, oder alternativ dazu ,
Einschalten des ersten Rückschlagventils und Ausschalten des zweiten Rückschlagventils ,
wobei nur die primäre Einspritzeinheit oder die sekundäre Einspritzeinheit aktiviert wird , um das Schmelzen und Einspritzen des Materials durchzuführen.

2. Spritzgießmaschine , umfassend einen Rahmen , einen auf dem Rahmen vorgesehenen Einspritzschichthalter und eine auf dem Einspritzschichthalter angeordnete Doppel-Einspritzeinheit zur Durchführung des Verfahrens nach Anspruch 1 , wobei die Doppel-Einspritzeinheit eine primäre Einspritzeinheit und eine sekundäre Einspritzeinheit umfasst , die in Bezug auf die primäre Einspritzeinheit befestigt ist; das äußere Ende der primären Einspritzeinheit mit einer Düse versehen ist, die sekundäre Einspritzeinheit mit der Düse über eine Verbindungsleitung in Verbindung steht und die Verbindungsleitung und die Düse eine Dreiwege-Verbindungsstruktur an der Verbindungsposition derselben bilden ; die Verbindungsleitung mit einem ersten Rückschlagventil versehen ist, um einen Durchflusskanal von der sekundären Einspritzeinheit zu der Düse abzusperren oder in eine Richtung zu öffnen ; wobei die Düse der primären Einspritzeinheit mit einem zweiten Rückschlagventil versehen ist, das zwischen der primären Einspritzeinheit und der Dreiwege-Verbindungsstruktur angeordnet ist, um den Durchflusskanal von der primären Einspritzeinheit zu der Düse abzusperren oder in eine Richtung zu öffnen ; und wobei die primäre Einspritzeinheit und die sekundäre Einspritzeinheit jeweils mit einer Einspritzschnecke versehen sind, die sich gleichzeitig vorwärts oder rückwärts bewegen kann.

3. Spritzgießmaschine nach Anspruch 2 , **dadurch gekennzeichnet , dass** sich die primäre Einspritzeinheit und die sekundäre Einspritzeinheit von dem Einspritzschichthalter aus erstrecken und parallel in dieselbe Richtung angeordnet sind.

4. Spritzgießmaschine nach Anspruch 3 , **dadurch gekennzeichnet , dass** die Verbindungsleitung und die Düse rechtwinklig zueinander angeordnet sind.

## Revendications

1. Procédé , comprenant les étapes suivantes :
a) fournir un dispositif d'unité d'injection double d'une machine de moulage par injection , comprenant :
une unité d'injection primaire et une unité d'injection secondaire , qui sont disposées sur un support de changement d'injection , dans lequel l'unité d'injection secondaire est fixe par rapport à l'unité d'injection primaire ;
l'extrémité extérieure de l'unité d'injection primaire est pourvue d'une buse, l'unité d'injection secondaire communique avec la buse par l'intermédiaire d'un conduit de connexion , et le conduit de connexion et la buse constituent une structure de connexion à trois voies à leur position de connexion ;
le conduit de connexion est pourvu d'un premier clapet de retenue pour fermer ou ouvrir de manière unidirectionnelle un passage d'écoulement de l'unité d'injection secondaire à la buse ,
dans lequel la buse de ladite unité d'injection primaire est pourvue d'un second clapet de retenue , qui est disposé entre ladite unité d'injection primaire et ladite structure de connexion à trois voies de manière à fermer ou à ouvrir de manière unidirectionnelle le passage d'écoulement de ladite unité d'injection primaire à ladite buse ,
dans lequel ladite unité d'injection primaire et ladite unité d'injection secondaire sont chacune munies d'une vis d'injection , respectivement, qui peut se déplacer simultanément vers l'avant ou vers l'arrière , de sorte qu'aucun déplacement relatif ne se produit entre ladite unité d'injection primaire et ladite unité d'injection secondaire lorsque ladite unité d'injection primaire et ladite unité d'injection secondaire sont en fonctionnement,
b) la mise en marche simultanée , lorsqu'un produit à traiter par le dispositif d'unité d'injection double est d'un poids élevé , du premier clapet de retenue et du second clapet de retenue , de sorte que l'unité d'injection primaire et l'unité d'injection secondaire effectuent simultanément la fusion et l'injection du matériau
c) fermer le premier clapet de retenue et ouvrir le second clapet de retenue lorsque le produit a besoin d'une petite quantité de matière fondue , ou alternativement,
la mise en marche de la première clapet de retenue et la mise à l'arrêt de la deuxième clapet de retenue,
de sorte que seule l'unité d'injection primaire ou l'unité d'injection secondaire est activée pour effectuer la fusion et l'injection du matériau.

2. Machine de moulage par injection , comprenant un châssis , un support de changement d'injection prévu sur le châssis , et un dispositif d'unité d'injection double pour mettre en oeuvre le procédé selon la revendication 1 , qui est disposé sur le support de changement d'injection , dans laquelle le dispositif d'unité d'injection double comprend une unité d'injection primaire et une unité d'injection secondaire qui est fixe par rapport à l'unité d'injection primaire ; l'extrémité extérieure de ladite unité d'injection primaire est pourvue d'une buse, ladite unité d'injection secondaire est mise en communication avec la buse par l'intermédiaire d'un conduit de connexion , et le conduit de connexion et la buse constituent une structure de connexion à trois voies à leur position de connexion ; le conduit de connexion est muni d'un premier clapet de retenue pour fermer ou ouvrir de manière unidirectionnelle un passage d'écoulement de l'unité d'injection secondaire à la buse ; dans lequel la buse de ladite unité d'injection primaire est munie d'un second clapet de retenue , qui est disposé entre ladite unité d'injection primaire et ladite structure de connexion à trois voies de manière à fermer ou ouvrir de manière unidirectionnelle le passage d'écoulement de ladite unité d'injection primaire à ladite buse; et dans lequel ladite unité d'injection primaire et ladite unité d'injection secondaire sont chacune munies d'une vis d'injection , respectivement , qui peut se déplacer simultanément vers l'avant ou vers l'arrière.

3. Machine de moulage par injection selon la revendication 2 , **caractérisée en ce que** ladite unité d'injection primaire et ladite unité d'injection secondaire s'étendent depuis le support de changement d'injection et sont disposées parallèlement dans la même direction.

4. Machine de moulage par injection selon la revendication 3 , **caractérisée en ce que** ledit conduit de connexion et ladite buse sont disposés perpendiculairement l'un par rapport à l'autre.
